Europäisches Patentamt

(19) European Patent Office

Office européen des brevets

(11) Numéro de publication: **0 239 045**
**B1**

(12) **FASCICULE DE BREVET EUROPEEN**

(45) Date de publication du fascicule du brevet: **03.10.90**

(51) Int. Cl.⁵: **B 23 C 5/22, B 23 C 5/10**

(21) Numéro de dépôt: **87104202.4**

(22) Date de dépôt: **21.03.87**

(54) Fraise à plaquettes de coupe amovibles.

(30) Priorité: **27.03.86 CH 1237/86**

(43) Date de publication de la demande:
**30.09.87 Bulletin 87/40**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**DE-A-3 425 699**
**FR-A-2 160 197**
**FR-A-2 276 892**
**US-A-3 354 526**

(73) Titulaire: **STELLRAM S.A.**
**Route de l'Etraz**
**CH-1260 Nyon, Vaud (CH)**
(73) Titulaire: **AEROSPATIALE Société Nationale**
**Industrielle**
**37, Boulevard de Montmorency**
**F-75781 Paris Cédex 16 (FR)**

(72) Inventeur: **Aebi, Gilbert**
**Route de Nyon**
**CH-1261 Trelex / VD (CH)**
Inventeur: **Raye, Pierre**
**Chemin du Vernay 2**
**CH-1196 Gland (CH)**
Inventeur: **David, Maurice Jean Armand**
**16, rue Georges Meynieu**
**F-44300 Nantes (FR)**
Inventeur: **Marianneau, Michel Emile Alcide**
**6, rue des Mésanges**
**F-44620 La Montagne (FR)**

(74) Mandataire: **Micheli, Michel-Pierre et al**
**MICHELI & CIE 118, Rue du Rhône Case Postale**
**47**
**CH-1211 Genève 6 (CH)**

Courier Press, Leamington Spa, England.

**Description**

La présente invention concerne une fraise à plaquettes de coupe amovibles, dite fraise "de pocketing", ainsi qu'aux plaquettes de coupe destinées à être utilisées avec cette fraise. Plus particulièrement, ce type de fraise dite "de pocketing" permet, en plus du rainurage et du contournage conventionnels, la pénétration dans la matière à usiner par la combinaison de son déplacement axial et du mouvement de la pièce selon au moins un des axes de la table.

On connaît déjà des fraises hélicoïdales à plaquettes brasées, présentant un angle de coupe radial, un angle de dépouille et un angle de taillant constants sur toute la hauteur de coupe, et qui sont généralement utilisées pour des opérations de finition en contournage, de dressage ou de rainurage. Toutefois, ces fraises présentent l'inconvénient de nécessiter des opérations de réaffûtage avec diminution du diamètre nominal; en outre, en cas de casse accidentelle d'une plaquette, la réparation d'une telle fraise est coûteuse puisqu'elle nécessite un débrassage, un brasage et un affûtage. Enfin, il est nécessaire de disposer de plusieurs fraises différentes pour l'usinage de matières différentes.

D'autre part, une fraise d'usinage présentant les caractéristiques énoncées dans le préambule de la revendication 1 est connue du document FR—A—2 276 892.

Le but de cette invention consiste donc à fournir une fraise à plaquettes de coupe amovibles qui obvie aux inconvénients précités des fraises hélicoïdales connues et qui soit de plus adaptée à des travaux de "pocketing". Ce but est atteint par la fraise selon l'invention, qui présente les caractéristiques définies dans la revendication 1.

Un autre objet de cette invention consiste en une plaquette de coupe destinée à être utilisée avec la fraise précitée selon l'invention, et qui présente les caractéristiques énoncées dans la revendication 7.

Le dessin annexé illustre schématiquement et à titre d'exemple une forme d'exécution de la fraise et de la plaquette de coupe selon l'invention.

La figure 1 en est une vue générale en perspective d'une fraise selon l'invention avec plaquettes de coupe amovibles.

Les figures 2 et 4 sont des vues latérales, selon deux positions différentes, de la fraise selon la figure 1, et la figure 3 en est une vue en bout de la face frontale.

Les figures 5 et 6 sont des vues respectivement de côté et en plan d'une plaquette de coupe selon l'invention.

Les figures 7A à 7F sont des vues partielles en coupe selon les lignes A à F de la figure 6.

Les figures 8A, 8B et 8C sont des vues schématiques en plan de trois variantes de la portion en pointe d'une plaquette de coupe selon l'invention.

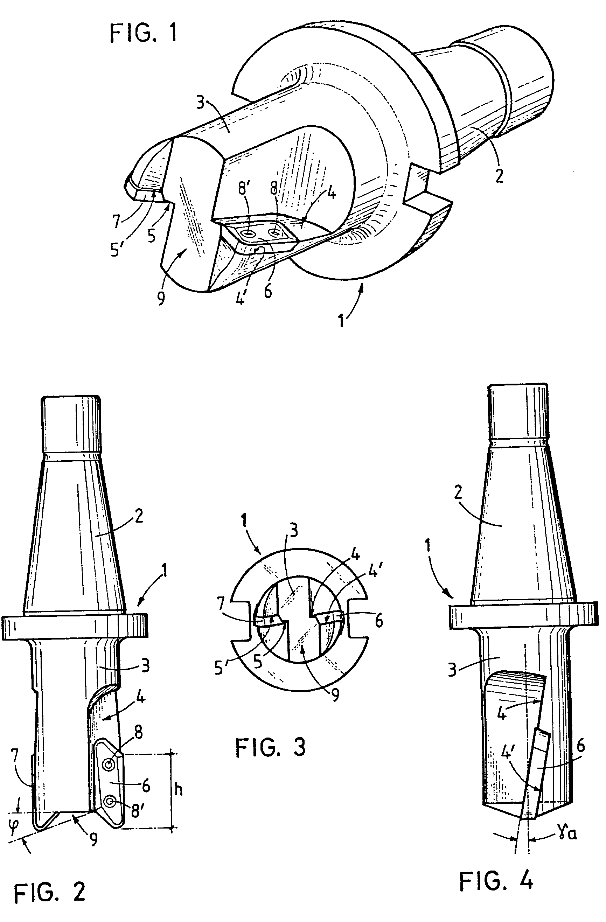

La forme d'exécution de la fraise selon l'invention, illustrée à titre d'exemple sur les figures 1 à 4, comporte un corps 1 présentant d'un côté une partie conique 2 destinée à la fixation de ce corps sur le mandrin d'une machine-outil, et de l'autre côté une partie antérieure 3, qui présente deux goujures 4, 5 comprenant chacune un logement 4', 5' destiné à recevoir en position de service une plaquette de coupe 6, 7.

Le fond de chaque logement 4', 5' fait avec l'axe longitudinal un angle d'hélice correspondant à l'angle de positionnement axial $\gamma_a$ de la plaquette sur la fraise qui ne doit pas être nul et qui est généralement compris entre 2 et 20°, ici par exemple environ 10°. La fraise illustrée à titre d'exemple uniquement a un diamètre de 40 mm, une hauteur de coupe maximale h de 30 mm et un angle de coupe radial effectif $\gamma_r$ de 18° environ. Pour d'autres applications, on peut prévoir des fraises de ce type avec une hauteur de coupe d'au moins 55 mm et un angle de coupe radial effectif $\gamma_r$ de 3 à 25°.

Chaque plaquette de coupe 6, 7 est fixée de manière amovible dans le logement 4', 5' prévu dans chaque goujure vrillée 4, 5, ici au moyen de deux vis 8, 8', de telle sorte qu'une de ces vis 8 tende à pousser la plaquette dans l'angle du logement et l'autre 8', perpendiculairement à l'axe longitudinal de ladite plaquette, contre la paroi latérale interne dudit logement.

La partie antérieure du corps de fraise 1 présente encore un dégagement frontal 9. Ce dégagement est prévu de telle sorte qu'il permette un angle de pénétration $\gamma$ dans la matière à usiner qui soit compris entre 5 et 30°, ici de 15° environ. Cet angle de pénétration $\gamma$ dépend d'une part du diamètre de la fraise et d'autre part des dimensions des plaquettes de coupe ainsi que de leur angle de pointe.

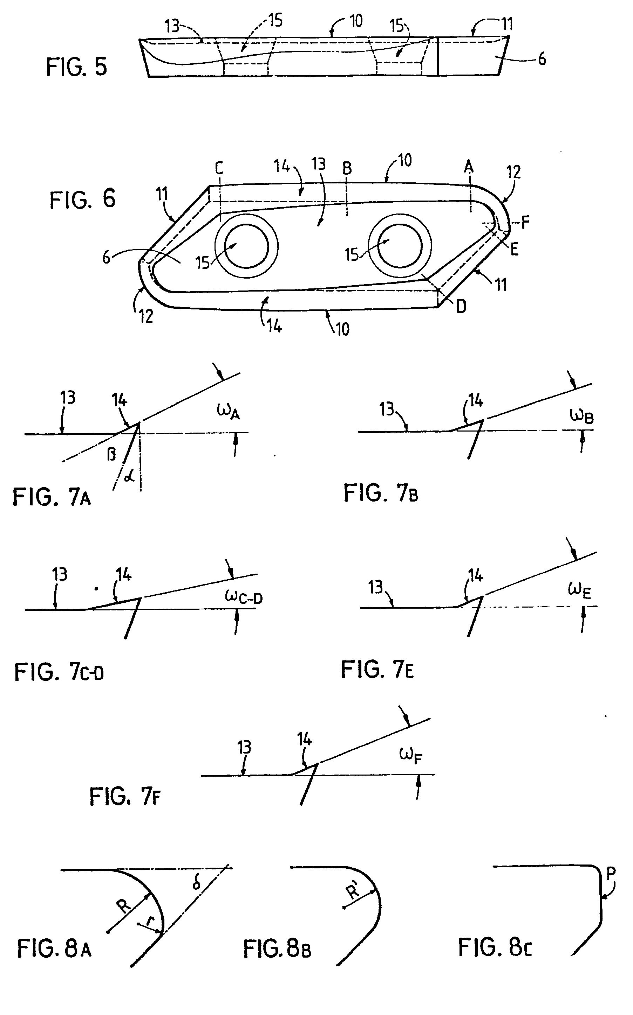

Les figures 5 et 6 illustrent à titre d'exemple une plaquette de coupe 6 utilisable avec le corps de fraise 1 décrit en référence aux figures 1 à 4. Cette plaquette 6 présente deux arêtes de coupe principales ou périphériques 10, légèrement incurvées vers l'extérieur, deux arêtes de coupe secondaires 11 et deux portions de pointe 12. La forme générale de la plaquette est celle d'un parallélogramme, éventuellement un losange pour des hauteurs de coupe plus faibles, avec des angles de pointe $\delta$ entre 40 et 70°, selon le diamètre de la fraise et compte tenu de l'angle de pénétration $\gamma$ souhaité; ici l'angle de pointe est de l'ordre de 45°.

La configuration de la portion de pointe peut varier entre un angle pratiquement vif et un rayon d'une valeur maximale de 8 à 10 mm. Dans le cas d'une pointe vive ou d'un rayon de faible valeur, la plaquette peut comporter un plat frontal entre son arête de coupe périphérique et son arête secondaire intérieure; un rayon de valeur moyenne sera tangent aux deux arêtes précitées, alors qu'un rayon plus grand sera complété par un rayon plus faible entre le plan frontal perpendiculaire à l'axe de l'outil et l'arête secondaire intérieure. Les figures 8A, 8B et 8C illustrent respectivement trois configurations possibles de la portion de pointe, respectivement avec un grand rayon R et un plus petit rayon r, avec un rayon unique R', et avec un plat frontal P.

La plaquette de coupe, telle qu'illustrée sur les figures 5 et 6, présente en outre une dépression centrale 13 raccordée aux arêtes de coupe principales 10 et secondaires 11 et aux portions de pointe 12 par une pente 14 à inclinaison variable, de manière à conférer à la plaquette, compte tenu de son angle de positionnement axial $\gamma_a$, un angle de coupe radial effectif $\gamma_r$ constant sur la fraise.

La variation de l'angle de coupe $\omega_A$ à $\omega_F$ de la plaquette le long de ses arêtes de coupe 10, 11 et des rayons 12 est illustrée sur les figures 7A à 7F, représentant chacune une coupe partielle schématique selon la ligne correspondante de la figure 6. Comme illustré, l'angle de coupe augmente le long de l'arête de coupe 10 (de $\omega_c$ à $\omega_A$), puis diminue le long du rayon 12 et de l'arête de coupe 11 (de $\omega_A$ à $\omega_D$).

L'angle de dépouille $\alpha$ varie le long des arêtes de coupe 10, 11, 12, de manière que cette dépouille soit constante sur la fraise, compte tenu de l'angle d'hélice $\gamma_a$; cette variation de l'angle de dépouille $\alpha$ correspond à la variation de l'angle de coupe $\omega$, d'où résulte un angle de taillant $\beta$ de la plaquette également constant.

Enfin, les deux arêtes principales 10 et leur face de dépouille sont incurvées vers l'extérieur (bombées), pour éviter, toujours compte tenu de l'angle d'hélice $\gamma_a$, le défaut géométrique des pièces usinées dû à la position axiale positive de la plaquette de coupe sur la fraise, donc pour assurer une parfaite planéité à la surface fraisée.

Pour permettre sa fixation sur le corps de fraise 1, chaque plaquette de coupe est percée d'orifices 15 à paroi partiellement conique (figure 5), destinés à recevoir des vis de fixation, ici deux vis 8, 8' (figures 1 et 2).

Par rapport aux fraises hélicoïdales connues à plaquettes de coupe brasées, la fraise à plaquettes de coupe amovibles selon l'invention présente notamment les avantages suivants:

—elle permet d'effectuer des travaux dits de "pocketing", c'est-à-dire avec pénétration dans la matière à usiner par la combinaison de son déplacement axial avec le mouvement de la pièce à usiner selon au moins un des axes de la table;

—un seul et même corps de fraise peut recevoir un choix de plaquettes de coupe de différentes nuances selon la matière à usiner;

—elle supprime les opérations de réaffûtage, qui sont généralement délicates et conduisent à une diminution du diamètre nominal; et

—elle évite les réparations coûteuses en cas de casse accidentelle d'une plaquette, puisqu'il suffit alors de remplacer la plaquette défectueuse par une autre.

## Revendications

1. Fraise à plaquettes de coupe amovibles comportant un corps (1) présentant au moins deux goujures (4, 5) comportant chacune un logement (4', 5') dont le fond fait avec l'axe longitudinal du corps un angle d'hélice non nul, une plaquette de coupe (6, 7) étant fixée de manière amovible dans chaque logement et comportant une portion de pointe (12) débouchant sur la face frontale du corps et une arête de coupe principale (10) débordant le long du bord latéral externe de la goujure, caractérisée par le fait que les plaquettes de coupe (6, 7) présentent la forme générale d'un parallélogramme, les deux grands côtés formant deux arêtes de coupe principales (10) et les deux petits côtés deux arêtes de coupe secondaires (11), la portion en pointe (12) étant définie entre chaque arête principale et chaque arête secondaire et ayant un angle de 40° à 70°, cette plaquette comportant une dépression centrale plane (13), parallèle à la face inférieure de la plaquette et raccordée aux arêtes de coupe respectivement principales et secondaires, ainsi qu'aux portions de pointes, par une pente (14) à inclinaison variable, et par le fait que, compte tenu de la position de la plaquette sur le corps selon un angle d'hélice non nul, la forme de cette plaquette est telle que l'angle de coupe radial sur la fraise soit non nul et constant et que l'angle de dépouille ($\alpha$) soit également constant, l'angle de taillant (13) de la plaquette étant lui-même constant.

2. Fraise selon la revendication 1, caractérisée par le fait que l'angle d'hélice est de 2 à 20°.

3. Fraise selon l'une des revendications 1 et 2, caractérisée par le fait que l'angle de coupe radial est de 3 à 25°.

4. Fraise selon l'une des revendications 1 à 3, caractérisée par le fait que l'angle de dépouille de la plaquette est de 5 à 20°.

5. Fraise selon l'une des revendications 1 à 4, caractérisée par le fait que le corps de fraise comporte un dégagement frontal, la forme et la dimension de ce dégagement étant telles que, compte tenu de l'angle de pointe des plaquettes de coupe, ils permettent un angle de pénétration dans la matière à usiner de 5 à 30°.

6. Fraise selon l'une des revendications 1 à 5, caractérisée par le fait que chaque plaquette de coupe est fixée de manière amovible sur le corps au moyen de deux vis coopérant avec deux orifices décentrés pratiqués dans cette plaquette.

7. Plaquette destinée à être utilisée avec la fraise selon la revendication 1, caractérisée par le fait qu'elle présente la forme générale d'un parallèlogramme, les deux grands côtés formant deux arêtes de coupe principales (10) et les deux petits côtés deux arêtes de coupe secondaires (11), une portion de pointe (12) étant définie entre chaque arête principale et chaque arête secondaire, et ayant un angle de 40 à 70°, par le fait qu'elle comporte une dépression centrale plane (13), parallèle à la face inférieure de la plaquette et raccordée aux arêtes de coupe respectivement principales et secondaires, ainsi qu'aux portions de pointe, par une pente (14) à inclinaison variable, cette inclinaison étant telle que compte tenu de l'angle d'hélice de la fraise d'angle de coupe radial soit constant tout au long de son arête principale, et par le fait que l'angle de dépouille ($\alpha$) varie le long de ses arêtes de coupe de telle sorte que la dépouille pour la fraise soit constante lorsque la plaquette est fixée sur ladite fraise.

8. Plaquette selon la revendication 7, caractérisée par le fait que son angle de dépouille de la plaquette est de 5 à 20°.

9. Plaquette de coupe selon l'une des revendications 7 et 8, caractérisée par le fait que les arêtes de coupe principales sont incurvées vers l'extérieur.

10. Plaquette de coupe selon l'une des revendications 7 à 9, caractérisée par le fait que les portions de pointe sont arrondies ou tronquées.

**Patentansprüche**

1. Fräser mit abnehmbaren Schneidplättchen, mit einem Körper (1), der mit mindestens zwei Einschnitten (4, 5) versehen ist, die je eine Aufnahme aufweisen, deren Boden mit der Längsachse des Körpers einen von Null verschiedenen Wendelwinkel bildet, wobei in jeder Aufnahme ein Schneidplättchen (6, 7) abnehmbar befestigt ist und einen Spitzenkantenbereich (12), der auf der Vorderseite des Körpers vortritt sowie eine Hauptschneidkante (10) aufweist, die entlang des äußeren Längsrandes des Einschnittes übersteht, dadurch gekennzeichnet, daß die Schneidplättchen (6, 7) im wesentlichen die Form eines Parallelogramms haben, dessen beide großen Seiten zwei Hauptschneidkanten (10) und dessen beide kleinen Seiten zwei Nebenschneidkanten (11) bilden, wobei der Spitzenbereich (12) zwischen jeder Hauptkante und jeder Nebenkante liegt und zwischen 40 und 70° beträgt, daß diese Plättchen eine zentrale ebene Vertiefung (13) aufweisen, die parallel zur Unterseite des Plättchens verläuft und an die Haupt- und Nebenschneidkanten sowie an die Spitzenbereiche über eine Schrägfläche (14) mit veränderlicher Neigung anschließt, und daß die Form des Plättchens unter Berücksichtigung der Tatsache, daß das Plättchen am Körper unter einem von Null verschiedenen Wendelwinkel positioniert ist, so getroffen ist, daß der Radialschneidwinkel am Fräser ungleich Null und konstant und der Schneidenfreiwinkel (α) ebenfalls konstant sowie der Keilwinkel (ß) des Schneidplättchens seinerseits konstant ist.

2. Fräser nach Anspruch 1, dadurch gekennzeichnet, daß der Wendelwinkel zwischen 2 und 20° liegt.

3. Fräser nach den Ansprüchen 1 und 2, dadurch gekennzeichnet, daß der Radialschneidwinkel zwischen 3 und 25° beträgt.

4. Fräser nach einem der Ansprüche 1 bis 3, dadurch gekennzeichnet, daß der Schneidenfreiwinkel des Schneidplättchens zwischen 5 und 20° beträgt.

5. Fräser nach einem der Ansprüche 1 bis 4, dadurch gekennzeichnet, daß der Fräserkörper eine frontale Ausnehmung aufweist, die eine solche Form und Abmessung hat, daß sie unter Berücksichtigung des Spitzenwinkels des Schneidplättchens einen Eindringwinkel in das Werkstück von 5 bis 30° ermöglichen.

6. Fräser nach einem der Ansprüche 1 bis 5, dadurch gekennzeichnet, daß jedes Schneidplättchen auf dem Körper mittels zweier Schrauben abnehmbar befestigt ist, die mit zwei in diesem Plättchen ausgebildeten exzentrischen Löchern zusammenwirken.

7. Schneidplättchen zur Verwendung mit einem Fräser nach Anspruch 1, dadurch gekennzeichnet, daß es im wesentlichen die Form eines Parallelogramms hat, dessen beide großen Seiten zwei Hauptschneidekanten (10) und dessen beide kleinen Seiten zwei Nebenschneidkanten (11) bilden, wobei ein Spitzenbereich (12) zwischen jeder Hauptkante und jeder Nebenkante gebildet ist und einen Winkel zwischen 40 und 70° hat, und daß dieses Plättchen eine zentrale ebene Vertiefung (13) aufweist, die parallel zur Unterseite des Plättchens verläuft und an die Haupt- und Nebenschneidkanten sowie an den Spitzenbereich über eine Schrägfläche (14) mit veränderlicher Neigung anschließt, wobei diese Neigung derart ist, daß unter Berücksichtigung des Wendelwinkels des Fräsers der Radialschneidwinkel entlang der gesamten Hauptschneidkante konstant ist und daß der Schneidenfreiwinkel (α) sich entlang seiner Schneidkanten derart ändert, daß die Freifläche des Fräsers konstant ist, wenn das Schneidplättchen an diesem Fräser befestigt ist.

8. Schneidplättchen nach Anspruch 7, dadurch gekennzeichnet, daß fer Schneidenfreiwinkel zwischen 5 und 20° beträgt.

9. Schneidplättchen nach Anspruch 7 oder 8, dadurch gekennzeichnet, daß die Hauptschneidkanten nach außen gekrümmt sind.

10. Schneidplättchen nach einem der Ansprüche 7 bis 9, dadurch gekennzeichnet, daß die Spitzenbereiche abgerundet oder kegelstumpfförmig sind.

**Claims**

1. Milling cutter with indexable inserts comprising a body (1) having at least two identations (4, 5) each presenting a housing (4', 5') the bottom of which makes with the longitudinal axis of the body a helix angle not equal to zero, a cutting insert (6, 7) being fixed in a removable manner in each housing and comprising a tip portion (12) emerging onto the frontal face of the body and a main cutting edge (10) extending beyond along the external lateral rim of the identation, characterized by the fact that the cutting inserts (6, 7) have the general shape of a parallelogram, the two long sides forming two main cutting edges (10) and the two small sides forming two secondary cutting edges (11), the tip portion (12) being defined between each main edge and each secondary edge and having an angle of 40° to 70°, this insert comprising a plane central depression (13) parallel to the lower face of the insert and connected respectively with the main and the secondary edges, as well as with the tip portions, by a slope (14) with variable incline, and by the fact that taking account of the position of the insert on the body according to a helix angle not equal to zero, the shape of this insert is such that the radial cutting angle on the milling cutter is not equal to zero and is constant, and that the clear-

ance angle ($\alpha$) is also constant with a wedge angle ($\beta$) of said insert being itself constant.

2. Milling cutter according to claim 1, characterized by the fact that the helix angle is from 2 to 20°.

3. Milling cutter according to anyone of claims 1 and 2, characterized by the fact that the radial cutting angle is from 3 to 25°.

4. Milling cutter according to anyone of claims 1 to 3, characterized by the fact that the clearance angle of the insert is from 5 to 20°.

5. Milling cutter according to anyone of claims 1 to 4, characterized by the fact that the body of the cutter comprises a frontal clearance, the shape and size of this clearance being such that, taking account of the included angle of the cutting inserts, they allow a penetration angle into the material to be machined of 5 to 30°.

6. Milling cutter according to anyone of claims 1 to 5, characterized by the fact that each cutting insert is fixed in a removable manner on the body by means of two screws cooperating with two decentered openings provided into the insert.

7. Cutting insert for use with the milling cutter according to claim 1, characterized by the fact that it has the general shape of a parallelogram, the two long sides forming two main cutting edges (10) and the two small sides forming two secondary cutting edges (11), a tip portion (12) being defined between each main edge and each secondary edge, and having an angle of 40 to 70°, by the fact that it comprises a plane central depression (13) parallel to the lower face of the insert and connected respectively with the main and the secondary edges, as well as with the tip portions, by a slope (14) with variable incline, this incline being such that taking account of the helix angle of the milling cutter, the radial cutting angle is constant along its whole main cutting edge, and by the fact that the clearance angle ($\alpha$) varies along its cutting edges in such a way that the clearance for the milling cutter is constant when the insert is fixed on said cutter.

8. Cutting insert according to claim 7, characterized by the fact that the clearance angle is of 5 to 20°.

9. Cutting insert according to anyone of claims 7 and 8, characterized by the fact that the main cutting edges are curved outwardly.

10. Cutting insert to anyone of claims 7 to 9, characterized by the fact that the tip portions are rounded or truncated.

FIG. 1

FIG. 2

FIG. 3

FIG. 4

FIG. 5

13 15 10 15 11 6

FIG. 6

11 C 14 13 B 10 A 12
6 F
15 15 E
12 11
14 10 D

13 14 $\omega_A$
$\beta$
$\alpha$

FIG. 7A

13 14 $\omega_B$

FIG. 7B

13 14 $\omega_{C-D}$

FIG. 7C-D

13 14 $\omega_E$

FIG. 7E

13 14 $\omega_F$

FIG. 7F

$\delta$
R
r

FIG. 8A

R'

FIG. 8B

P

FIG. 8C

2